# EUROPEAN PATENT APPLICATION

(11) **EP 0 893 197 A2**
(43) Date of publication of application: **27.01.1999**
(21) Application number: 97121178.4
(22) Date of filing: 02.12.1997
(51) Int. Cl.: B23Q 1/66, B23Q 1/01, B23Q 11/08, B23Q 3/08, B23Q 11/00

(54) **A numerical control router enclosed by a housing**

(30) Priority: 20.07.1997 JP 209679/97
(71) Applicant: HEIAN CORPORATION, Hamamatsu-shi, Shizuoka-ken (JP)
(72) Inventor: Yamauchi, Yoshiyuki, Hamamatsu-shi, Shizuoka-ken (JP)
(74) Representative: Kirschner, Klaus Dieter, Dipl.-Phys.

(57) **Abstract**

A numerical control router which is enclosed by a housing comprises a horizontal move member moving on horizontal rails provided with the side of a support structure, longitudinal move member moving on longitudinal rails provided with the horizontal move member, a head structure mounted on the longitudinal move member, and heads having process tools as a drill and a cutter respectively moved on the head structure by a cylinder before and behind. The housing encloses the surrounding of the horizontal move member, the longitudinal move member and the head structure. The housing is supported by the support structure and has an opening before the head structure. Bearing members are provided with the support structure before the opening of the housing. A rotatary cylinder for rotating a rotary shaft is supported by the bearing member. Two suction tables are provided with the rotary shaft, a rotatary cylinder for rotating rotary shalt, and two tables are attached to the rotary shaft opposite to each other, whereby the one suction table which is mounting and sucking a process board, closes the opening of the housing by rotating the suction table by the rotary cylinder, and the process board is removed from the other suction table and a new process board is mounted on the other suction table.

## Description

### Background of the Invention:

The present invention relates to a numerical control router enclosed by a housing having an opening for closing by two suction tables alternatively.

In the numerical control routor for processing a process board, rails are provided with a horizontal beam supported by a supporting structure on a base, a head structure supported by the rails to move right and left, downward plural head having respectively motors are mounted on the head structure and processing tools as a drill or a cutter are respectively attached to the shaft of motors.

Table rails are provided with the base downward the heads, a suction table on which a process board is sucked is moved on the rails to the head structure before and behind.

Because, the numerical control router is not covered by any housing and the suction table is moved under the heads, wood chips and dust are scattered on and near the suction table when the process board is processed. and noise is generated when the process board is processed.

### Summary of the Invention:

It is, therefore, the primary object of the present invention to provide a numerical control router enclosed by a housing in which chips and dust are shut when a process board is processed.

It is another object of the present invention to a numerical control router enclosed by a housing having two suction table by which the opening of the housing is closed alternatively.

It is the other object of the present invention to a numerical control router enclosed by a housing in which a process board sacked on one suction table is processed and a processed process board is removed from the other suction table and a new process board is mounted on the other suction table.

In order to accomplish the above and other object, the present invention comprises a horizontal move member moving on horizontal rails provided with the side of a support structure, longitudinal move member moving on longitudinal rails provided with the horizontal move member, a head structure mounted on the longitudinal move member, and heads having process tools as a drill and a cutter respectively moved on the head structure by a cylinder before and behind, characterized in that a housing encloses the surrounding of the horizontal move member, the longitudinal move member and the head structure, the housing is supported by the support structure and having an opening before the head structure, bearing members are provided with the support structure before the opening of the housing, a rotatary cylinder for rotating a rotary shaft is supported by the bearing member, two suction table are provided with the rotary shaft, a rotatary cylinder for rotating rotary shaft, and two table are attached to the rotary shaft opposite to each other, whereby the one suction table is mounting and sucking a process board closes the opening of the housing by rotating the suction table by the rotary cylinder and the process board is removed from the other suction table and a new process board is mounted on the other suction table.

### BRIEF DESCRIPTION OF THE DRAWINGS:

Fig. 1 shows a front view of a numerical control router enclosed by a housing in the present invention,
Fig. 2 shows a right side view of a numerical control router in Fig. 1.
Fig. 3 shows a enlarged partial view of a suction table of a numerical control router in Fig. 2.
Fig. 4 shows a front view of the another embodiment of the present invention.
Fig. 5 shows a front view of the another embodiment of the present invention.
Fig. 6 shows a enlarged partial view of the another embodiment of the present invention.

### DESCRIPTION OF THE PREFERRED EMBODIMENTS;

As shown in Figs, 1, 2 and 3, a horizontal beam member 1a is constructed on a support structure 1, horizontal rails 2 are fixed the side of the horizontal beam member 1a. A screw shaft 3 is provided with a hollow portion of the horizontal beam member between the horizontal rails 2 to be rotated by a motor 4, bearings 2a and 2b are engaged with the horizontal rails 2 and a screw engaged member 5 is provided with a horizontal move member 6 between the bearings 2a and 2b.

Longitudinal rails 7 are provided with the front face of the horizontal move member 6, a screw shaft 8 is provided with the horizontal move member 6 between the longitudinal rails 7 and is connected to a connecting member 10 rotated by a servomotor 9 mounted on the top of the horizontal move member 6. Bearings 11 engaged with the longitudinal rails 7 and a screw engaging member 13 engaged with the screw shaft 8 are provided with a longitudinal move member 12.

Rails 15 are fixed the under surface of a structure supporting member 14 provided with the longitudinal move member 12, a screw shaft 16 provided with the rails 15 in parallel is provided with the structure supporting member 14 to be rotated by a servomotor 17, bearings 18 engaged with rails 15 and a screw engaging member 19 are mounted on a head structure 20, and heads 21a, 21b, 21c and 21d are provided with the head structure 20 to be moved by a cylinder 22.

A housing 23 is constructed on the horizontal beam member 1a, on the front of a stretched member 1b of the support structure 1 and the side of the horizontal beam member and the stretched member 1b, and a opening 23a of the housing 23 is formed the front of the head structure 20. A bearing members 24 and 25 are constructed the stretched member 1b, and a rotary shaft 26 is rotatablly attached to the bearing members 24 and 25. Rotary cylinder 27 is provided to on end of the rotary shaft 27. one ends of two suction tables 31 and 32 are respectively attached to support members 29 and 30 to put the rotary shaft 26 between the support members 29 and 30. rotary supports 33 and 34 are attached to the rotary shaft 26 near the support member 29 and 30, the bases of rotary cylinders 35 and 36 are rotatablly attached to the rotary supports 33 and 34 respectively, the driving shafts 35a and 36a of the rotary cylinders 35 and 36 are attached to support members 31a and 31b near the suction tables 31 and 32, table supporting member 24, and the suction tables 31 and 32 are inclined by driving the rotary cylinders 35 and 36.

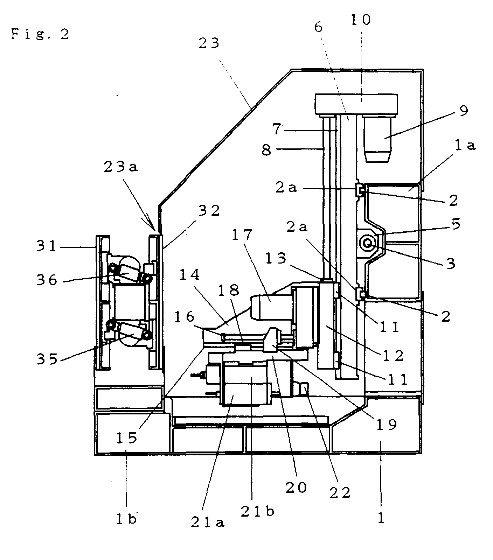

In the numerical control router of the present invention, as shown in Fig. 2, the one suction table 31 is vertically kept in front of the opening 23a of the housing 23. other table 32 is vertically kept to close the opening 23a of housing 23.

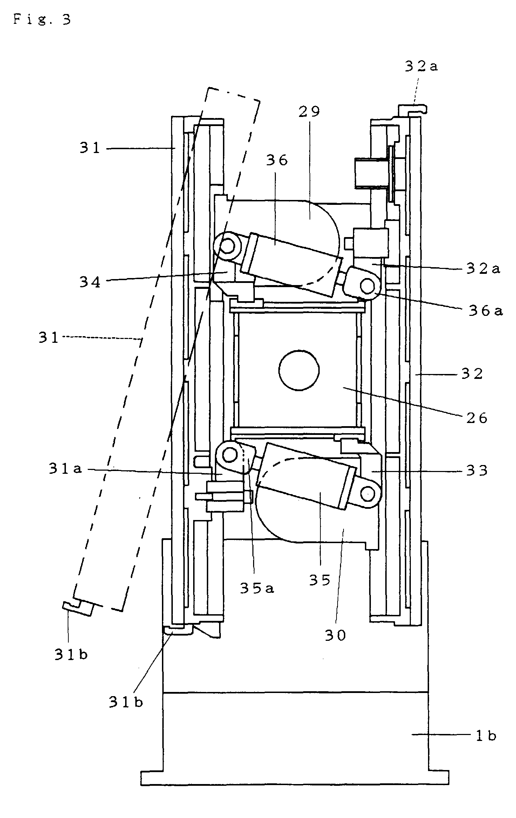

the one suction table 31 is inclined by driving the rotary cylinder 35 as shown in Fig. 3, a process board is positioned on the suction table 31 when the end of the process board is put on the suction table 31. Then the rotary cylinder 35 is returned the original position, the suction table is vertically positioned, while after the head structure 20 is positioned by driving the servomotors 4 and 9 and moving the horizontal move member 6 and the longitudinal move member 12 and is projected the predetermined position by the servomotor 17, the other process board put on the other suction table 32 by which the opening 32a is closed is processed by projecting the heads 21a to 21d.

When the process of the process board is ended, the rotary shaft is rotated by the rotary cylinder 27, and the other suction table 32 positioned to close the opening 23a is turned in the frond of the opening 23a. Then, the suction table 32 is inclined by driving the rotary cylinder 36, the processed process board is removed from the other suction table 32, a new process board is positioned on the other suction table 32 by putting on the end support 32a of the suction table 32, whereby the new process board on the other suction table 32 is waited for next processing. The suction table 31 is positioned to close the opening 23a by driving the rotary cylinder 27 and the process board on the suction table 31 is processed by driving the head structure 20 and the heads 21a to 21d,

Stated above, because the two suction tables 31 and 32 are positioned to close alternatively the opening 23a by driving the rotary cylinder 27 and the process boards mounted on the two suction tables 31 and 32 are alternatively processed, the work time for respectively mounting on the two suction tables 31 and 32 is shortened and work efficiency is improved. Also, because the two tables 31 and 32 are vertically positioned in the opening 23, wood chips and dust generated in processing time and scattered are fallen under the inner suction table and along the housing 23. Therefore, it is not necessary to clean on the process board and the inner suction table and the inner portion of the housing 23 may be cleaned every the predetermined interval, a factory in which the numerical control router of the present invention is set is kept clean and becomes quiet because noise is absorbed by the housing 23.

Since a belt conveyer 37 is set on the stretched member 1b of the support structure 1 and the end of the belt conveyer 28 is projected the outside of the housing 23, the fallen wood chips and dust are collected in the outside of the housing 23.

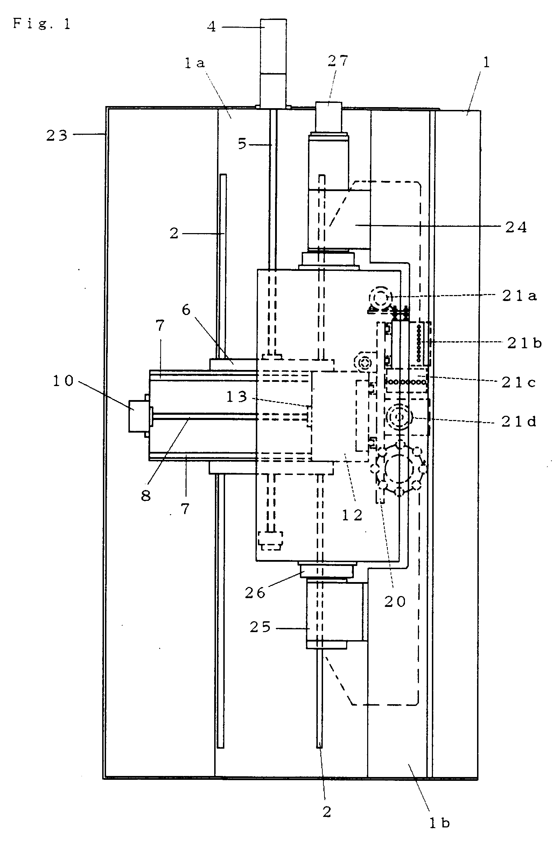

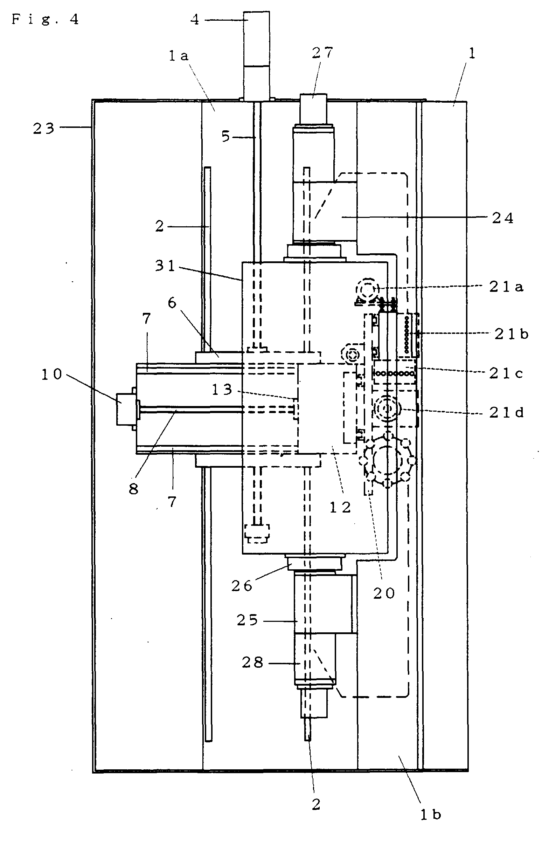

Fig. 4 shows a front view of a numerical control router of the other embodiment in the present invention. 1 designates a support structure, 2; horizontal rails, 3; a screw shaft, 4; a servomotor, 6; a horizontal move member, 7; longitudinal rails, 8 ; a screw shaft, 10; a connecting member, 12; a longitudinal move member, 13; a screw engaging member, 20; a head structure, 21a to 21d; heads, 24 and 25; bearing members, 26; a rotary shaft, these constructions are same as the above embodiment of Figs. 1, 2 and 3 and the explain of these constructions is omitted. In this embodiment, rotary cylinders 27 and 28 are attached to the rotary shaft 26, whereby the rotation of the two suction tables 31 and 32 are smoothly moved.

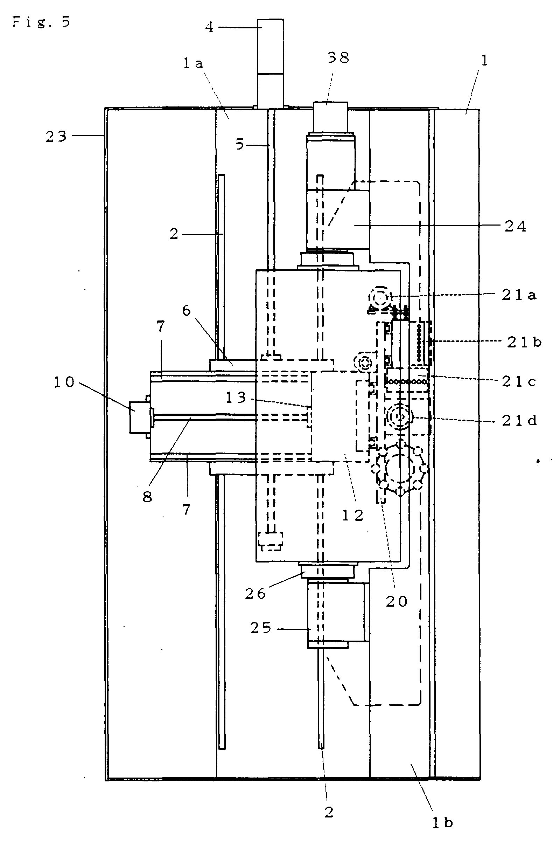

Fig. 5 shows front view of a numerical control router of the other embodiment in the present invention. 1 designates a support structure, 2; horizontal rails, 3; a screw shaft, 4; a servomotor, 6; a horizontal move member, 7; longitudinal rails, 8 ; a screw shaft, 10; a connecting member, 12; a longitudinal move member, 13; a screw engaging member, 20; a head structure, 21a to 21d; heads, 24 and 25; bearing members, 26; a rotary shaft, these constructions are same as the above embodiment of Figs. 1, 2 and 3 and the explain of these constructions is omitted. In this embodiment, a servomotor 38 having a speed change gear is attached to the rotary shaft 26 in stead of the rotary cylinders 27 and 28.

The same effect as the above embodiment can be obtained in this embodiment.

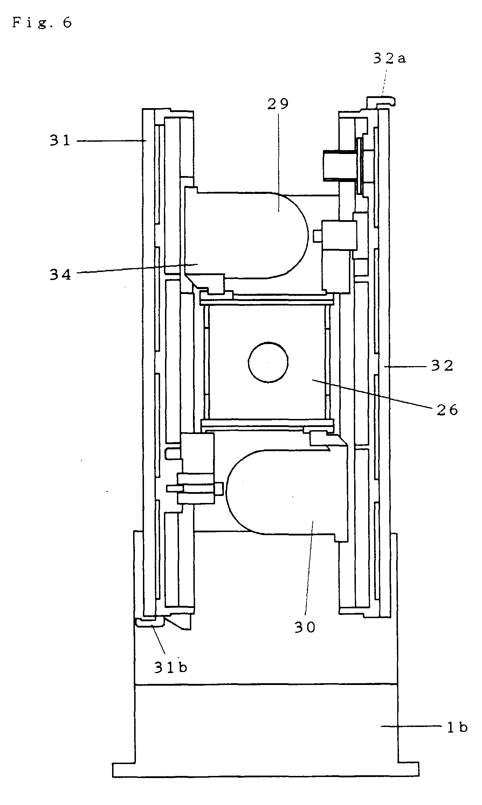

Fig. 6 shows a enlarged partial view of a suction table. 26 designates a rotary shaft, 31 and 32; suction tables, these constructions are same as the above embodiment of Figs. 1, 2 and 3 and the explain of these constructions is omitted. In this embodiment, the rotary cylinders 35 and 36 for rotating the suction tables 31 and 32 are omitted.

In this embodiment, the suction tables 31 and 32 are constructed to be slightly inclined, the under end of an outside suction table is drawn and fixed by hand. Alternatively, the two suction tables 31 and 32 are fixed on the rotary shaft 26, or the process board is mounted on or removed from the outer suction table to be slightly inclined.

## Claims

1. In a numerical control router enclosed by a housing comprising a horizontal move member moving on horizontal rails provided with the side of a support structure, longitudinal move member moving on longitudinal rails provided with the horizontal move member, a head structure mounted on the longitudinal move member, and heads having process tools as a drill and a cutter respectively moved on the head structure by a cylinder before and behind,characterized in that a housing encloses the surrounding of the horizontal move member, the longitudinal move member and the head structure, the housing is supported by the support structure and having an opening before the head structure, bearing members are provided with the support structure before the opening of the housing, a rotatary cylinder for rotating a rotary shaft is supported by the bearing member, two suction table are provided with the rotary shaft, a rotatary cylinder for rotating rotary shaft, and two table are attached to the rotary shaft opposite to each other, whereby the one suction table is mounting and sucking a process board closes the opening of the housing by rotating the suction table by the rotary cylinder and the process board is removed from the other suction table and a new process board is mounted on the other suction table.

2. A numerical control router enclosed by a housing as set forth claim 1 wherein two rotary cylinder are attached to the both end of a rotary shaft for supporting two suction table.

3. A numerical control router enclosed by a housing as set forth claim 1 wherein a rotary shaft for supporting two suction table is rotated by a servomotor.

4. A numerical control router enclosed by a housing as set forth claim 1 wherein the two suction tables are supported by two support members respectively attached to the rotary shaft and are constructed to be inclined by two rotary cylinders for being easy to remove from and mount on the process board.

5. A numerical control router enclosed by a housing as set forth claim 1 wherein a belt conveyer is set on a stretched member of the support structure and the end of the belt conveyer is projected the outside of the housing.
